# EUROPEAN PATENT SPECIFICATION

(11) **EP 3 849 920 B1**
(45) Date of publication and mention of the grant of the patent: **20.03.2024**
(21) Application number: 19765729.9
(22) Date of filing: 10.09.2019
(51) Int. Cl.: B65D 83/38, B65D 1/02, B29L 31/00

(54) **PLASTIC AEROSOL BOTTLE**
KUNSTSTOFFAEROSOLFLASCHE
BOUTEILLE D'AÉROSOL EN PLASTIQUE

(30) Priority: 11.09.2018 FR 1858130
(43) Date of publication of application: 21.07.2021
(73) Proprietor: L'OREAL, 75008 Paris (FR)
(72) Inventor: HERVET, Jean-Marie, 92110 CLICHY (FR); VENIEZ, Judith, 93601 AULNAY-SOUS-BOIS (FR); PETIT, Aurélien, 93601 AULNAY-SOUS-BOIS (FR); FARNAULT, Olivier, 93601 AULNAY-SOUS-BOIS (FR)
(74) Representative: Cabinet Nony
(86) International application number: PCT/EP2019/074109
(87) International publication number: WO 2020/053210

(56) References cited:
- EP-A1- 0 653 982
- WO-A2-2007/140407
- US-A- 5 083 685
- US-A- 5 586 695
- US-A1- 2005 127 022

## Description

### Field of the invention

The present invention relates to pressurized bottles, also known as aerosol bottles, the container of which is made of plastics material.

### Prior art and objectives of the invention

The patent application FR 3 047 234 discloses a pressurized bottle having a container made of plastics material comprising a body that extends along a longitudinal axis and a neck that is integral with the body, the body having a portion with a substantially frustoconical shape extending over more than a third of the total height of the container.

EP 0 653 982 discloses a method of making a polyester container having an enhanced level of crystallinity in the sidewall while maintaining a low level of crystallinity in a thickened base portion. The container is used as a refillable container which can withstand higher caustic wash temperatures and exhibits reduced flavor carryover, or as a hot-fill container. A sidewall-forming section of a preform is initially expanded, heated to contract and crystallize the same, and then reexpanded; a base-forming portion of the preform is shielded from the heat treatment and is expanded either before or after the heat treatment step. US 5 083 685 discloses a vessel for aerosol made of a synthetic resin.

A plastic aerosol bottle should comply with regulations. Tests on a plastic aerosol bottle containing a liquefied gas are generally more difficult to satisfy than those relating to plastic aerosol bottles containing a compressed gas.

The tests make it possible to verify that the plastic pressurized bottle is able to resist an operating pressure of generally several bar on account of the presence of a pressurized gas, notably a pressurized liquefied gas, inside it. This resistance has to be verified at a relatively high temperature in order to ensure safety in use. Furthermore, since the bottle can be filled under vacuum, this ensures squeeze resistance when the reduced pressure is at a maximum, before filling is started. The bottle also has to be resistant to impacts, notably to being dropped at different temperatures.

The regulatory tests to be carried out are thus drop tests, after 6 h at 55°C, after 24 h at -18°C and after 3 months at 40°C, the hot air test of 5 h at 75°C, the water bath at 54°C, two-month compatibility tests at room temperature and at 45°C, and a test pressure test and a bursting pressure test. A six-month test at room temperature and a three-year test at room temperature for verifying predictivity may also be mentioned.

The invention aims to provide a bottle made of plastics material that meets all of these constraints in a satisfactory manner.

### Summary of the invention

The invention meets this need by virtue of a pressurized bottle having a container made of plastics according to claim 1.

The minimum quantity of material associated with the thickness of the container in the indicated areas nevertheless gives the bottle mechanical strength that allows it to successfully undergo the abovementioned tests, with or without compressed air and water. The aerosol bottle can notably resist the ejection of the aerosol valve during the critical hot air test at 75°C. The bottle can remain stable after passing through a water bath at 54°C. These minimum thicknesses also allow the bottle not to craze after various tests. By virtue of these thicknesses, notably that of the lower end of the body, the bottom does not reverse, notably at a pressure of 8 bar, nor does it deform, for example by sagging of the bottom of the bottle, at the lower end of the body, in contact with a support. Advantageously, the minimum quantity of material, i.e. the minimum thickness, is preferred for the various portions of the bottle, this minimum thickness being chosen, as indicated, so as to allow the bottle to successfully undergo the various regulatory tests.

The container preferably has a thickness of at least 0.4 mm, notably at least 0.5 mm or 0.55 mm, or at least 0.60 mm or at least 0.65 mm, preferably a thickness between 0.4 mm and 0.80 mm, better between 0.60 mm and 0.80 mm, in a second portion with a height of at least 8 mm, for example a height of at least 10 mm, that is situated, starting from the upper end of the neck, at a distance of between 40% and 64% of the total height of the container. Such a thickness value at this location on the container makes it possible to avoid the deformation of the body of the container during the water bath test at 54°C. It also makes it possible to successfully undergo the vacuum test and to be compatible with the sleeve fitting method, which consists in shrinking a film around the bottle using various techniques, for example using infrared, steam or hot air, without causing a change in dimensions over the exposure times for the infrared and the hot air and below the Tg for the steam.

The container advantageously has a thickness of at least 0.4 mm, notably at least 0.5 mm, notably at least 0.55 mm or at least 0.6 mm, preferably a thickness between 0.4 mm and 0.69 mm, better between 0.55 mm and 0.69 mm in a third portion with a height of at least 8 mm that is situated, starting from the upper end of the neck, at a distance of between 65% and 91% of the total height of the container. Such a thickness value at this location on the container makes it possible to avoid any breakage of the container during the drop test and also to avoid any deformation of the bottom of the container during the water bath test at 54°C.

The container preferably has a thickness of at least 0.6 mm, notably at least 0.65 mm, notably at least 0.7 mm, preferably a thickness between 0.6 mm and 0.81 mm, better between 0.65 mm and 0.81 mm in a fourth portion that is situated, starting from the upper end of the neck, at a distance of between 92% and 98% of the total height of the container. This makes it possible to successfully undergo the hot air test and the drop test.

Such a minimum thickness value at this location on the container makes it possible to avoid any breakage of the container during the drop test and also to avoid any deformation of the bottom of the container during the water bath test at 54°C.

The body of the container may have a bottom that is designed to allow the container to stand vertically on a horizontal flat surface, the bottom comprising a downwardly concave indentation, the lower end of the body extending around this indentation, notably following a bottom line of circular contour that forms the lower end of the body.

In this case, the concave indentation preferably has a crown at the center of which the thickness is at least 2.5 mm, notably at least 2.7 mm, for example a thickness equal to 2.5 mm, or a thickness comprised in the range between 2.5 mm and 3.13 mm.

Still when there is an indentation, the thickness of the container halfway between the lower end of the body and the crown of the indentation may be equal to at least 1.8 mm, notably to at least 2 mm, preferably a thickness between 1.8 mm and 2.5 mm, for example a thickness equal to 1.8 mm. It is preferable for the thickness at this location to be uniform so as to avoid any asymmetric deformation of the container.

The shape of the bottom and the minimum thickness of the bottom including the indentation make it possible to have resistance under pressure and to avoid asymmetric deformation of the bottle, and make it possible to successfully undergo the drop tests and the temperature tests, in particular the test in a water bath at 54°C.

The height of the first portion or of each of the first, second and/or third portions, over which the thickness of the container is measured, is preferably equal to 10 mm. Advantageously, said height is identical for each of the first, second and/or third portions.

The variation in thickness of the container within the first portion or each of the first, second and/or third portions may be at most 20% to 40%, notably 25% to 40%, for example 25% to 30%. This means that there is no difference in thickness, longitudinally and radially, within the portion in question, over its entire height and around its entire circumference, between the smallest thickness measured and the largest thickness measured, which is 20% (or a percentage between 20% and 40%) greater than the smallest thickness. Thus, for a smallest thickness measured of 1 mm and for a percentage of 20%, the greatest thickness measured on the portion in question must not, according to this condition, be greater than 1 mm + 20% * 1 mm= 1.2 mm.

The body advantageously has a part with a substantially frustoconical, notably rectilinear, shape. This frustoconical shape is preferably flared downwardly for the stability of the container set down vertically on a horizontal flat surface. In this case, the first, second and third portions may be situated within said part with a substantially frustoconical shape.

The neck has two rings that define an annular groove between one another, namely an upper ring and a supporting lower ring, the thickness of the neck in a portion substantially parallel to the longitudinal axis situated under the lower ring being at least 1.06 mm, for example at least 2.7 mm, notably at least 2.9 mm, preferably a thickness between 1.06 mm and 2.9 mm.

The upper ring of the neck advantageously serves to crimp a dispensing valve cup and the lower ring, situated therebeneath, may serve to transport the container along production and/or filling lines.

The neck may be joined to the body by a shoulder, the thickness of the container at the junction between the neck and the shoulder being at least 2 mm, notably at least 2.4 mm, preferably a thickness between 2 mm and 3 mm, preferably between 2 mm and 2.5 mm.

The neck may be at least partially crystallized, notably above the shoulder and to a distance of around 2 mm below the supporting lower ring.

The plastics material of the container advantageously includes at least one polymer chosen from the group consisting of PET or PETP (polyethylene terephthalate), PEN (polyethylene naphthalate), PCT (polycyclohexylenedimethylene terephthalate), recycled polymers, notably referred to as PCR (post-consumer recycled) polymers, in particular recycled PET, bioPET (biological polyethylene terephthalate), PP (polypropylene), PE (polyethylene), PEF (polyethylene furanoate), PET-G/PCT-G (glycolized polyethylene terephthalate/glycolized polycyclohexylenedimethylene terephthalate), PET with glass fibers, PC (polycarbonate), POM (polyoxymethylene), SMMA (styrene methyl methacrylate), PMMA (polymethyl methacrylate), SAN (styrene acrylonitrile), PBT (polybutadiene terephthalate), PA6 (polyamide 6), PA12 (polyamide 12), PEEK (polyether ether ketone), PPO (polyphenylene oxide), PSU (polysulfone), filled polymers, notably with mineral fillers and/or glass fibers, and mixtures thereof.

The container may contain a cosmetic product or the like.

The container may contain a liquefied or compressed gas, with an overpressure of between 1 and 13 bar (10⁵ and 13.10⁵ Pa) at 20°C.

The bottle may have a dispensing system for dispensing the cosmetic product contained in the container, being provided with an actuating member that the user can press in order to dispense the product through at least one outlet orifice, for example in the form of a spray, a foam, a gel or a cream. The dispensing system has for example a dispensing head bearing the actuating member and a cup, fastened to the container, bearing a valve with a hollow control stem to be controlled by being depressed or tilted.

The bottle may also have a system of the Bag-on-Valve (BoV) type, forming an aerosol valve with a welded bag. In this case, the product is placed inside the bag while the propellant is filled into the space between the bag and the container. The product is dispensed by the propellant by simply pressing the bag. When the actuating member is depressed, the product is extracted from the bag by the propellant, this creating the distribution notably in the form of a spray, cream or gel.

### Brief description of the figures

The invention may be better understood from reading the following detailed description of nonlimiting exemplary embodiments thereof and from studying the appended drawing, in which:
- Figure 1 schematically shows an elevation view of a pressurized bottle according to the invention,
- Figure 2 shows a top view of the pressurized bottle in figure 1,
- Figure 3 is a schematic longitudinal section through the bottle in figure 1 with a protective cap,
- Figure 4 is a schematic elevation view of the container of the bottle in figure 1,
- Figure 5 is an enlarged schematic and perspective view of an upper part of the container in figure 4,
- Figure 6 is a view in partial longitudinal cross section of the upper part of the container in figure 4, and
- Figure 7 is a schematic view in longitudinal section of a lower part of the container in figure 4.

### Detailed description of embodiments of the invention

The pressurized bottle 1 shown in the figures has a container 3 containing the product to be dispensed, for example a cosmetic product to be sprayed, and a dispensing system 2 mounted on the container 3.

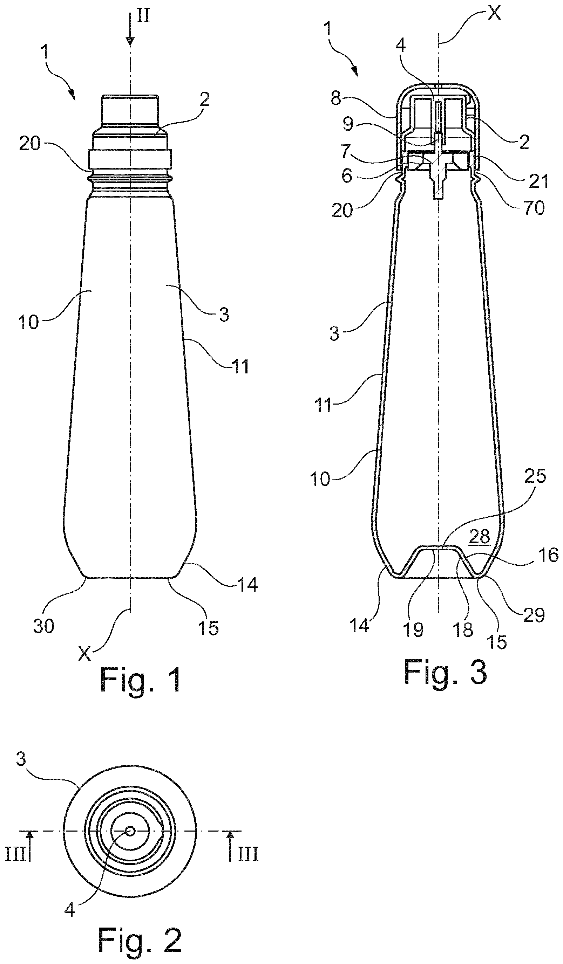

The dispensing system 2 can be realized in various ways, being provided with an actuating member 4 (visible notably in figures 2 and 3) that the user can press in order to dispense the product through at least one outlet orifice, for example in the form of a spray.

The dispensing system 2 has a dispensing head bearing the actuating member 4 and a valve 7 with a hollow control stem 9 to be controlled by being depressed or tilted, having a cup 6 and shown schematically in figure 3.

The product contained in the container 3 leaves the valve stem 9 when the latter is actuated, and then reaches the outlet orifice of the dispensing head through one or more internal ducts thereof.

The container 3 has a body 10 formed as a single piece that extends along a longitudinal axis X and is extended at its upper end by a neck 20, the entire container 3 made up of the body 10 and the neck 20 being made of thermoplastic material, for example PET. The formation of the container 3 may include the blow molding of a preform within a mold, in a manner known per se. The thermoplastic material of which the container 3 is made is for example transparent, at least in the region of the body 10.

When not in use, the neck 20 is at least partially concealed by a removable protective cap 8, which is fastened to the container for example by snap-fastening. The neck of the bottle may be concealed by a cup of the bottle, which is fastened to the cup of the valve.

The body 10 has a frustoconical shape over a major part 11 of its height. The lower part 14 of the body 10 is rounded as far as a lower end 30 of the container that is formed at the bottom 15 of the container 3.

As can be seen in figure 3, the bottom 15 of the container 3 has an indentation 16, of outwardly concave shape, defined by a frustoconical wall 18 that converges towards the inside of the container.

The frustoconical wall 18 is attached to a crown 19 of the indentation 16, forming in this example a substantially flat wall, which bears at its center 25 the trace of the injection point of the preform used to produce the container 3 by injection blow molding or compression blow molding.

The container 3 has on its inside an annular groove 28 around the frustoconical wall 18, in which the end of a dip tube connected to the dispensing system 2 can extend if need be, this tube not being shown in figure 3. This annular groove 28 forms the, substantially circular, bottom line 29, which is in contact with the horizontal surface on which the bottle 1 stands when it is positioned vertically. This bottom line 29, which forms the, closed, lower end 30 of the container 3, is referred to as the "standing line".

The neck 20 of the container 3 has an, open, upper end with an upper ring 21 that allows the dispensing system 2 to be attached and more particularly the cup 6 to be crimped. The neck 20 also has a lower ring 26, which can serve to transport the container along production and/or filling lines, and can be referred to as support ring or supporting lower ring. In this example, the neck 20 is crystallized over at least a part of its height, in the example illustrated as far as around 2 mm below the supporting lower ring 26. In a variant, the neck 20 is not crystallized.

The upper ring 21 and lower ring 26 define a groove 70 between one another, the role of said groove being to allow the crimping pliers for the cup 6 to be fitted under the upper ring 21.

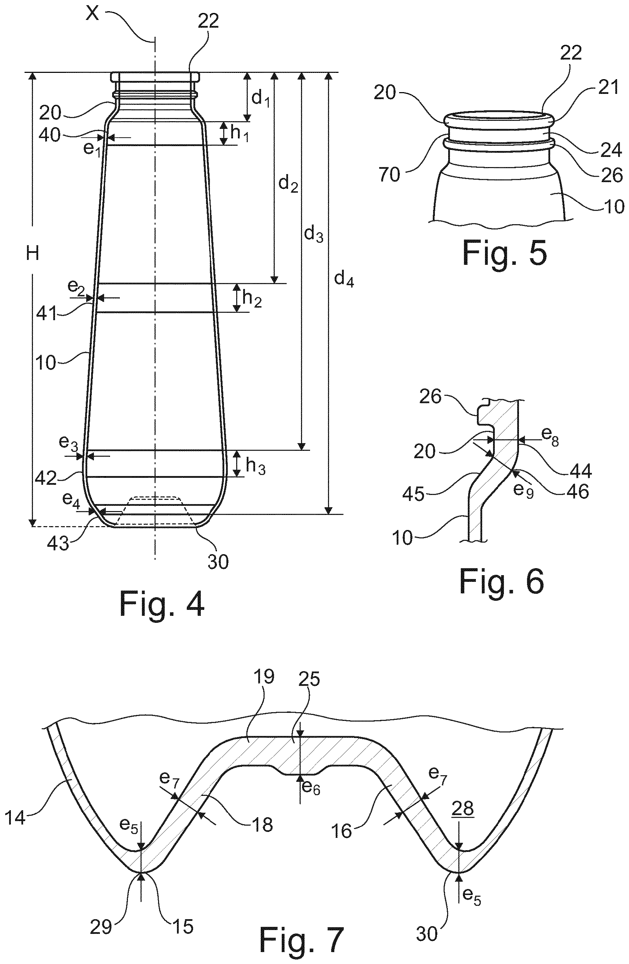

In the example illustrated, and as can be seen in figure 4, the container 3 has a thickness e₁ of at least 1.06 mm in a first portion 40 with a height h₁ of 10 mm that is situated, starting from the upper end 22 of the neck, at a distance d₁ of between 10% and 40% of the total height H of the container 3. In the example illustrated, the height H, measured between the upper end 22 and the lower end 30, is equal to 131 mm. The distance d₁ is equal to 20 mm, the first portion 40 therefore extending over a height ranging from 20 mm to 30 mm from the upper end 22. This minimum thickness e₁ makes it possible, during the hot air test at 75°C, to avoid ejection of the aerosol valve.

The container 3 furthermore has, at the lower end 30 of the body 10, a minimum thickness e₅ of 2 mm, at the bottom line 29, as can be seen in figure 7.

These minimum thickness characteristics at these locations on the container make it possible to successfully undergo regulatory tests, notably those referred to as "hot air tests". In particular, the thickness e₅ is chosen so as to make it possible to have a container bottom which does not deform in an asymmetric manner and thus to maintain a bottle that is stable and not tilted with respect to the vertical.

The volume of the container 3 in this example is 140 ml.

In the example illustrated, the container 3 also has the following features.

The container 3 has a thickness e₂ of at least 0.55 mm in a second portion 41 with a height h₂ of 10 mm that is situated, starting from the upper end 22 of the neck 20, at a distance d₂ of between 40% and 64% of the total height H of the container 3, in this case at a distance d₂ = 61 mm. This minimum thickness e₂ makes it possible to have no problems during the vacuum test or during sleeve fitting, and possibly to avoid the deformation of the body of the container in the water bath test at 54°C.

The container 3 has a thickness e₃ of at least 0.55 mm in a third portion 42 with a height h₂ of 10 mm that is situated, starting from the upper end 22 of the neck 20, at a distance d₃ of between 65% and 91% of the total height H of the container 3, in this case at a distance d₃ = 103.5 mm. This makes it possible to successfully undergo the drop test and to avoid significant deformations during the passage through the water bath at 54°C.

The container 3 has a thickness e₄ of at least 0.7 mm in a fourth portion 43 that is situated, starting from the upper end 22 of the neck 20, at a distance d₄ of between 92% and 98% of the total height H of the container 3. The fourth portion 43 does not have a significant height and is limited substantially to a line, as illustrated. The distance d₄ is equal to 126 mm in this example. This minimum thickness e₄ makes it possible to avoid any breakage of the container during the drop test or any deformation in the water bath at 54°C.

Referring to figure 7, at the center 25 of the crown 19 of the indentation 18, the thickness ee is at least 2.7 mm. The thickness e₇ of the container 3 halfway between the lower end 30 of the body 10 and the crown 19 of the indentation 18 is equal to at least 2 mm. It is important for the thickness e₇ to be uniform around the circular perimeter of the indentation 18 in order to avoid asymmetric deformation of the container there.

In this example, the height h₁, h₂ and h₃ of the first, second and third portions, respectively, is identical for each of the portions and equal to 10 mm. It would not constitute a departure from the scope of the invention if this height were lower or higher, being at least 8 mm, or if the heights of the portions were different from one another.

The variation in thickness of the container within the first, second and third portions is at most 20% in this example. This is a tolerance that makes it possible to ensure that there is not excessive variation in thickness within one and the same portion.

It should be noted that the first, second and third portions are situated mainly in the part 11 with a substantially frustoconical shape.

As far as the neck 20 is concerned, the thickness e₈ thereof in a portion 44 parallel to the longitudinal axis X situated under the lower ring 26, as can be seen in figure 6, is at least 2.9 mm.

Furthermore, the neck 20 is joined to the body 10 by a shoulder 45, the thickness e₉ of the container at the junction 46 between the neck 20 and the shoulder 45 being at least 2.4 mm.

The invention is not limited to the example which has just been described.

In the following text, by way of nonlimiting indication, further values of distances di, d₂, d₃ and d₄ for further containers with different volumes and total heights can be found, the heights hi, h₂ and h₃ remaining unchanged, as do the corresponding minimum thicknesses.

| Container volume | H | d₁ | d₂ | d₃ | d₄ |
|---|---|---|---|---|---|
| 110 ml | 105.1 mm | 20 mm | 47 mm | 77.6 mm | 100.1 mm |
| 210 ml | 166.5 mm | 20 mm | 86.5 mm | 139 mm | 161.5 mm |
| 110 ml | 102.3 mm | 20 mm | 47 mm | 74.8 mm | 97.3 mm |
| 210 ml | 165.3 mm | 20 mm | 86.5 mm | 137.8 mm | 160.3 mm |
| 210 ml | 166.7 mm | 20 mm | 86.5 mm | 139.2 mm | 161.7 mm |

The thickness e₁ may be at least 0.9 mm, the thickness e₂ may be at least 0.5 mm, the thickness e₃ may be at least 0.5 mm, the thickness e₄ may be at least 0.6 mm, the thickness e₅ may be at least 1.4 mm, the thickness e₆ may be at least 2.5 mm, the thickness e₇ may be at least 1.8 mm, the thickness e₈ may be at least 2.7 mm and the thickness e₉ may be at least 2 mm, without departing from the scope of the invention.

In a particular embodiment, the height h₁ is equal to 6 mm and the heights h₂ and h₃ are equal to 10 mm.

## Claims

1. A pressurized bottle (1) having a container (3) made of plastics material, comprising:
- a body (10), formed as a single piece, that extends along a longitudinal axis (X) and has a lower end (30),
- a neck (20) that is integral with the body (10) and has an upper end (22), the total height (H) of the container (3) being measured between the lower end (30) of the body (10) and the upper end (22) of the neck (20),
wherein the container (3) has a thickness (e₁) of at least 0.65 mm, preferably at least 0.9 mm, preferably between 0.65 mm and 1.13 mm, preferably between 0.9 mm and 1.13 mm, in a first portion (40) with a height (h₁) of at least 6 mm, notably at least 8 mm, that is situated, starting from the upper end (22) of the neck (20), at a distance (d₁) of between 10% and 40% of the total height (H) of the container (3), and in that the container (3) has, at the lower end (30) of the body, a thickness (e₅) of at least 1.1 mm, notably at least 1.4 mm, preferably a thickness between 1.1 mm and 2 mm, preferably between 1.4 mm and 1.8 mm,
**characterized in that** the neck (20) has two rings (21, 26) that define an annular groove (70) between one another, namely an upper ring (21) and a supporting lower ring (26), a thickness (e₈) of the neck (20) in a portion substantially parallel to the longitudinal axis (X) situated under the lower ring (26) being at least 1.06 mm.

2. The bottle (1) as claimed in claim 1, wherein the container (3) has a thickness (e₂) of at least 0.4 mm, notably at least 0.5 mm or at least 0.6 mm, notably at least 0.65 mm, preferably between 0.4 mm and 0.8 mm, preferably between 0.6 mm and 0.8 mm, in a second portion (41) with a height (h₂) of at least 8 mm that is situated, starting from the upper end (22) of the neck (20), at a distance (d₂) of between 40% and 64% of the total height (H) of the container (3).

3. The bottle (1) as claimed in either of the preceding claims, wherein the container (3) has a thickness (e₃) of at least 0.4 mm , notably at least 0.5 mm, notably at least 0.55 mm or at least 0.6 mm, preferably between 0.4 mm and 0.69 mm, preferably between 0.55 mm and 0.69 mm, in a third portion (42) with a height (h₃) of at least 8 mm that is situated, starting from the upper end (22) of the neck (20), at a distance (d₃) of between 65% and 91% of the total height (H) of the container (3).

4. The bottle (1) as claimed in any one of the preceding claims, wherein the container (3) has a thickness (e₄) of at least 0.6 mm, notably at least 0.65 mm, notably at least 0.7 mm, preferably between 0.6 mm and 0.81 mm, preferably between 0.65 mm and 0.81 mm in a fourth portion (43) that is situated, starting from the upper end (22) of the neck (20), at a distance (d₄) of between 92% and 98% of the total height (H) of the container (3).

5. The bottle (1) as claimed in any one of the preceding claims, wherein the body (10) of the container (3) has a bottom (15) that is designed to allow the container (3) to stand on a horizontal flat surface, the bottom (15) comprising a downwardly concave indentation (18), the lower end (30) of the body extending around this indentation (18), notably following a bottom line (29) of circular contour that forms the lower end (30) of the body (10), wherein the concave indentation (18) has preferably a crown (19) at the center (25) of which the thickness (e₆) is at least 2.5 mm, notably at least 2.7 mm, notably equal to 2.5 mm.

6. The bottle (1) as claimed in claim 5, wherein a thickness (e₇) of the container (3) halfway between the lower end (30) of the body (10) and the crown (19) of the indentation (18) is equal to at least 1.8 mm, notably to at least 2 mm, preferably between 1.8 mm and 2.5 mm.

7. The bottle (1) as claimed in claims 2 and 3 or in any one of claims 4 to 6, when claims 4 to 6 depend on claims 2 and 3, wherein the height (h₁) of the first portion (40), the height (h₂) of the second portion (41) and/or the height (h₃) of the third portion (42) is equal to 10 mm.

8. The bottle (1) as claimed in claims 2 and 3 or in any one of claims 4 to 7, when claims 4 to 7 depend on claims 2 and 3, wherein said height (h₁) of the first portion (40), said height (h₂) of the second portion (41) and/or said height (h₃) of the third portion (42) are identical.

9. The bottle (1) as claimed in claims 2 and 3 or in any one of claims 4 to 8, when claims 4 to 8 depend on claims 2 and 3, wherein a variation in thickness of the container (3) within the first portion (40) or each of the first, second and/or third portions (40; 41; 42) is at most 20% to 40%.

10. The bottle (1) as claimed in any one of the preceding claims, wherein the body (10) has a part (11) with a substantially frustoconical shape.

11. The bottle (1) as claimed in the preceding claim and claim 2 and 3, wherein said first, second and third portions (40, 41, 42) are mainly situated in said part (11) with a substantially frustoconical shape.

12. The bottle (1) as claimed in any one of the preceding claims, wherein the thickness (e₈) of the neck (20) in the portion substantially parallel to the longitudinal axis (X) situated under the lower ring (26) is at least 2.7 mm, notably at least 2.9 mm, preferably between 1.06 mm and 2.9 mm.

13. The bottle (1) as claimed in any one of the preceding claims, wherein the neck (20) is joined to the body (10) by a shoulder (45), the thickness (e₉) of the container (3) at a junction (46) between the neck (20) and the shoulder (45) being at least 2 mm, notably at least 2.4 mm.

14. The bottle (1) as claimed in any one of the preceding claims, wherein the neck (20) is at least partially crystallized.

15. The bottle (1) as claimed in any one of the preceding claims, wherein the plastics material includes at least one polymer chosen from the group consisting of PET or PETP, PEN, PCT, recycled polymers, notably referred to as PCR polymers, in particular recycled PET, bioPET, PP, PE, PEF, PET-G/PCT-G, PET with glass fibers, PC, POM, SMMA, PMMA, SAN, PBT, PA6, PA12, PEEK, PPO, PSU, filled polymers, notably with mineral fillers and/or glass fibers, and mixtures thereof.

## Patentansprüche

1. Druckflasche (1) mit einem Behälter (3) aus Kunststoffmaterial, umfassend:
- einen Körper (10), der als ein einziges Stück gebildet ist und der sich entlang einer Längsachse erstreckt (X) und ein unteres Ende (30) aufweist,
- einen Hals (20), der integral mit dem Körper (10) ist und ein oberes Ende (22) aufweist, wobei die Gesamthöhe (H) des Behälters (3) zwischen dem unteren Ende (30) des Körpers (10) und dem oberen Ende (22) des Halses (20) gemessen ist,
wobei der Behälter (3) eine Dicke (e₁) von mindestens 0,65 mm, vorzugsweise mindestens 0,9 mm, vorzugsweise zwischen 0,65 mm und 1,13 mm, vorzugsweise zwischen 0,9 mm und 1,13 mm, in einem ersten Abschnitt (40) mit einer Höhe (h₁) von mindestens 6 mm, insbesondere von mindestens 8 mm, aufweist, der sich, ausgehend vom oberen Ende (22) des Halses (20), in einem Abstand (d₁) zwischen 10 % und 40 % der Gesamthöhe (H) des Behälters (3) befindet, und wobei der Behälter (3) beim unteren Ende (30) des Körpers eine Dicke (e₅) von mindestens 1,1 mm, insbesondere von mindestens 1,4 mm, vorzugsweise eine Dicke zwischen 1,1 mm und 2 mm, vorzugsweise zwischen 1,4 mm und 1,8 mm, aufweist,
**dadurch gekennzeichnet, dass**
der Hals (20) zwei Ringe (21, 26) aufweist, die zwischen einander eine ringförmige Rille (70) definieren, nämlich einen oberen Ring (21) und einen stützenden unteren Ring (26), wobei eine Dicke (e₈) des Halses (20) in einem zur Längsachse (X) im Wesentlichen parallelen Abschnitt, der sich unter dem unteren Ring (26) befindet, mindestens 1,06 mm beträgt.

2. Flasche (1) nach Anspruch 1, **dadurch gekennzeichnet, dass** der Behälter (3) eine Dicke (e₃) von mindestens 0,4 mm, insbesondere von mindestens 0,5 mm oder von mindestens 0,6 mm, insbesondere mindestens 0,65 mm, vorzugsweise zwischen 0,4 mm und 0,8 mm, vorzugsweise zwischen 0,6 mm und 0,8 mm, in einem zweiten Abschnitt (41) mit einer Höhe (h₂) von mindestens 8 mm aufweist, der sich, ausgehend vom oberen Ende (22) des Halses (20) in einem Abstand (d₂) zwischen 40% und 64% der Gesamthöhe (H) des Behälters (3) befindet.

3. Flasche (1) nach einem der vorhergehenden Ansprüche, wobei der Behälter (3) eine Dicke (e₃) von mindestens 0,4 mm, insbesondere von mindestens 0,5 mm, insbesondere von mindestens 0,55 mm oder mindestens 0,6 mm, vorzugsweise zwischen 0,4 mm und 0,69 mm, vorzugsweise zwischen 0,55 mm und 0,69 mm, in einem dritten Abschnitt (42) mit einer Höhe (h₃) von mindestens 8 mm aufweist, der sich, ausgehend vom oberen Ende (22) des Halses (20) in einem Abstand (d₃) zwischen 65 % und 91 % der Gesamthöhe (H) des Behälters (3) befindet.

4. Flasche (1) nach einem der vorhergehenden Ansprüche, wobei der Behälter (3) eine Dicke (e₄) von mindestens 0,6 mm, insbesondere mindestens 0,65 mm, insbesondere mindestens 0,7 mm, vorzugsweise zwischen 0,6 mm und 0,81 mm, vorzugsweise zwischen 0,65 mm und 0,81 mm, in einem vierten Abschnitt (43) aufweist, der sich, ausgehend vom oberen Ende (22) des Halses (20) in einem Abstand (d₄) zwischen 92 % und 98 % der Gesamthöhe (H) des Behälters (3) befindet.

5. Flasche (1) nach einem der vorhergehenden Ansprüche, wobei der Körper (10) des Behälters (3) einen Boden (15) aufweist, der so gestaltet ist, dass der Behälter (3) auf einer horizontalen, flachen Oberfläche stehen kann, wobei der Boden (15) eine nach unten konkave Einbuchtung (18) aufweist und das untere Ende (30) des Körpers sich um diese Einbuchtung (18) herum erstreckt, insbesondere einer Bodenlinie (29) mit kreisförmiger Kontur folgend, die das untere Ende (30) des Körpers (10) bildet, wobei die konkave Einbuchtung (18) in der Mitte (25) vorzugsweise eine Krone (19) aufweist, dessen Dicke (e₆) mindestens 2,5 mm, insbesondere mindestens 2,7 mm beträgt, insbesondere gleich 2,5 mm ist.

6. Flasche (1) nach Anspruch 5, wobei eine Dicke (e₇) des Behälters (3) auf halber Strecke zwischen dem unteren Ende (30) des Körpers (10) und der Krone (19) der Einbuchtung (18) mindestens 1,8 mm, insbesondere mindestens 2 mm, vorzugsweise zwischen 1,8 mm und 2,5 mm beträgt.

7. Flasche (1) nach den Ansprüchen 2 und 3 oder nach einem der Ansprüche 4 bis 6, wenn die Ansprüche 4 bis 6 von den Ansprüchen 2 und 3 abhängen, wobei die Höhe (h₁) des ersten Abschnitts (40), die Höhe (h₂) des zweiten Abschnitts (41) und/oder die Höhe (h₃) des dritten Abschnitts (42) gleich 10 mm ist.

8. Flasche (1) nach den Ansprüchen 2 und 3 oder nach einem der Ansprüche 4 bis 7, wenn die Ansprüche 4 bis 7 von den Ansprüchen 2 und 3 abhängen, wobei die Höhe (h₁) des ersten Abschnitts (40), die Höhe (h₂) des zweiten Abschnitts (41) und/oder die Höhe (h₃) des dritten Abschnitts (42) identisch sind.

9. Flasche (1) nach den Ansprüchen 2 und 3 oder nach einem der Ansprüche 4 bis 8, wenn die Ansprüche 4 bis 8 von den Ansprüchen 2 und 3 abhängen, wobei eine Variation der Dicke des Behälters (3) innerhalb des ersten Abschnitts (40) oder jedes des ersten, zweiten und/oder dritten Abschnitts (40; 41; 42) höchstens 20 % bis 40 % beträgt.

10. Flasche (1) nach einem der vorhergehenden Ansprüche, wobei der Körper (10) einen Teil (11) mit einer im Wesentlichen kegelstumpfförmigen Form aufweist.

11. Flasche (1) nach dem vorhergehenden Anspruch und Anspruch 2 und 3, wobei 30 der erste, zweite und dritte Abschnitt (40, 41, 42) hauptsächlich in dem Teil (11) mit einer im Wesentlichen kegelstumpfförmigen Form angeordnet sind.

12. Flasche (1) nach einem der vorhergehenden Ansprüche, wobei die Dicke (e₈) des Halses (20) in dem zur Längsachse (X) im Wesentlichen parallelen Abschnitt, welcher sich unter dem unteren Ring (26) befindet, mindestens 2,7 mm, insbesondere mindestens 2,9 mm, vorzugsweise zwischen 1,06 mm und 2,9 mm beträgt.

13. Flasche (1) nach einem der vorhergehenden Ansprüche, wobei der Hals (20) über eine Schulter (45) mit dem Körper (10) verbunden ist, wobei die Dicke (e₉) des Behälters (3) an einer Verbindungsstelle (46) zwischen dem Hals (20) und der Schulter (45) mindestens 2 mm, insbesondere mindestens 2,4 mm, beträgt.

14. Flasche (1) nach einem der vorhergehenden Ansprüche, wobei der Hals (20) zumindest teilweise kristallisiert ist.

15. Flasche (1) nach einem der vorhergehenden Ansprüche, wobei das Kunststoffmaterial mindestens ein Polymer umfasst, das aus der Gruppe ausgewählt ist, die aus PET oder PETP, PEN, PCT, recycelten Polymeren, insbesondere PCR-Polymeren, insbesondere recyceltem PET, BioPET, PP, PE, PEF, PET-G/PCT-G, PET mit Glasfasern, PC, POM, SMMA, PMMA, SAN, PBT, PA6, PA12, PEEK, PPO, PSU, gefüllten Polymere, insbesondere mit mineralischen Füllstoffen und/oder Glasfasern, und Mischungen davon besteht.

## Revendications

1. Bouteille sous pression (1) comportant un récipient (3) constitué de matière plastique, comprenant :
- un corps (10), formé d'une seule pièce, qui s'étend le long d'un axe longitudinal (X) et a une extrémité inférieure (30),
- un col (20) qui est intégré au corps (10) et a une extrémité supérieure (22), la hauteur totale (H) du récipient (3) étant mesurée entre l'extrémité inférieure (30) du corps (10) et l'extrémité supérieure (22) du col (20),
dans laquelle le récipient (3) a une épaisseur (e₁) d'au moins 0,65 mm, de préférence au moins 0,9 mm, de préférence entre 0,65 mm et 1,13 mm, de préférence entre 0,9 mm et 1,13 mm, dans une première partie (40) ayant une hauteur (h₁) d'au moins 6 mm, notamment au moins 8 mm, qui est située, à partir de l'extrémité supérieure (22) du col (20), à une distance (d₁) comprise entre 10 % et 40 % de la hauteur totale (H) du récipient (3), et dans laquelle le récipient (3) a, à l'extrémité inférieure (30) du corps, une épaisseur (e₅) d'au moins 1,1 mm, notamment au moins 1,4 mm, de préférence une épaisseur comprise entre 1,1 mm et 2 mm, de préférence entre 1,4 mm et 1,8 mm,
**caractérisée en ce que**
le col (20) comporte deux anneaux (21, 26) qui définissent une rainure annulaire (70) entre ceux-ci, à savoir un anneau supérieur (21) et un anneau inférieur de support (26), une épaisseur (e₈) du col (20) dans une partie sensiblement parallèle à l'axe longitudinal (X) situé sous l'anneau inférieur (26) étant d'au moins 1,06 mm.

2. Bouteille (1) selon la revendication 1, dans laquelle le récipient (3) a une épaisseur (e₂) d'au moins 0,4 mm, notamment au moins 0,5 mm ou au moins 0,6 mm, notamment au moins 0,65 mm, de préférence entre 0,4 mm et 0,8 mm, de préférence entre 0,6 mm et 0,8 mm, dans une deuxième partie (41) ayant une hauteur (h₂) d'au moins 8 mm qui est située, à partir de l'extrémité supérieure (22) du col (20), à une distance (d₂) comprise entre 40 % et 64 % de la hauteur totale (H) du récipient (3).

3. Bouteille (1) selon l'une quelconque des revendications précédentes, dans laquelle le récipient (3) a une épaisseur (e₃) d'au moins 0,4 mm , notamment au moins 0,5 mm, notamment au moins 0,55 mm ou au moins 0,6 mm, de préférence comprise entre 0,4 mm et 0,69 mm, de préférence entre 0,55 mm et 0,69 mm, dans une troisième partie (42) ayant une hauteur (h₃) d'au moins 8 mm qui est située, à partir de l'extrémité supérieure (22) du col (20), à une distance (d₃) comprise entre 65 % et 91 % de la hauteur totale (H) du récipient (3).

4. Bouteille (1) selon l'une quelconque des revendications précédentes, dans laquelle le récipient (3) a une épaisseur (e₄) d'au moins 0,6 mm, notamment au moins 0,65 mm, notamment au moins 0,7 mm, de préférence entre 0,6 mm et 0,81 mm, de préférence entre 0,65 mm et 0,81 mm dans une quatrième partie (43) qui est située, à partir de l'extrémité supérieure (22) du col (20), à une distance (d₂) comprise entre 92 % et 98 % de la hauteur totale (H) du récipient (3).

5. Bouteille (1) selon l'une quelconque des revendications précédentes, dans laquelle le corps (10) du récipient (3) a un fond (15) qui est conçu pour permettre que le récipient (3) tienne debout sur une surface plate horizontale, le fond (15) comprenant un évidement concave vers le bas (18), l'extrémité inférieure (30) du corps s'étendant autour de cet évidement (18), notamment suivant une ligne inférieure (29) de contour circulaire qui forme l'extrémité inférieure (30) du corps (10), dans laquelle l'évidement concave (18) comporte de préférence une couronne (19) au centre (25) de laquelle l'épaisseur (e₆) est d'au moins 2,5 mm, notamment au moins 2,7 mm, notamment égale à 2,5 mm.

6. Bouteille (1) selon la revendication 5, dans laquelle une épaisseur (e₇) du récipient (3) à mi-chemin entre l'extrémité inférieure (30) du corps (10) et la couronne (19) de l'évidement (18) est égale à au moins 1,8 mm, notamment à au moins 2 mm, de préférence entre 1,8 mm et 2,5 mm.

7. Bouteille (1) selon les revendications 2 et 3 ou l'une quelconque des revendications 4 à 6, lorsque les revendications 4 à 6 sont dépendantes des revendications 2 et 3, dans laquelle la hauteur (h₁) de la première partie (40), la hauteur (h₂) de la deuxième partie (41) et/ou la hauteur (h₃) de la troisième partie (42) est égale à 10 mm.

8. Bouteille (1) selon les revendications 2 et 3 ou l'une quelconque des revendications 4 à 7, lorsque les revendications 4 à 7 sont dépendantes des revendications 2 et 3, dans laquelle ladite hauteur (h₁) de la première partie (40), ladite hauteur (h₂) de la deuxième partie (41) et/ou ladite hauteur (h₃) de la troisième partie (42) sont identiques.

9. Bouteille (1) selon les revendications 2 et 3 ou l'une quelconque des revendications 4 à 8, lorsque les revendications 4 à 8 sont dépendantes des revendications 2 et 3, dans laquelle une variation de l'épaisseur du récipient (3) dans la première partie (40) ou chacune des première, deuxième et/ou troisième parties (40 ; 41 ; 42) est d'au plus 20 % à 40 %.

10. Bouteille (1) selon l'une quelconque des revendications précédentes, dans laquelle le corps (10) comporte une partie (11) ayant une forme sensiblement tronconique.

11. Bouteille (1) selon la revendication précédente et les revendications 2 et 3, dans laquelle lesdites première, deuxième et troisième parties (40, 41, 42) sont principalement situées dans ladite partie (11) ayant une forme sensiblement tronconique.

12. Bouteille (1) selon l'une quelconque des revendications précédentes, dans laquelle l'épaisseur (e₈) du col (20) dans la partie sensiblement parallèle à l'axe longitudinal (X) située sous l'anneau inférieur (26) est d'au moins 2,7 mm, notamment au moins 2,9 mm, de préférence entre 1,06 mm et 2,9 mm.

13. Bouteille (1) selon l'une quelconque des revendications précédentes, dans laquelle le col (20) est assemblé au corps (10) par un épaulement (45), l'épaisseur (e₉) du récipient (3) au niveau d'une jonction (46) entre le col (20) et l'épaulement (45) étant d'au moins 2 mm, notamment d'au moins 2,4 mm.

14. Bouteille (1) selon l'une quelconque des revendications précédentes, dans laquelle le col (20) est au moins partiellement cristallisé.

15. Bouteille (1) selon l'une quelconque des revendications précédentes, dans laquelle la matière plastique comprend au moins un polymère choisi dans le groupe constitué de PET ou PETP, PEN, PCT, des polymères recyclés, notamment appelés polymères PCR, en particulier PET recyclé, bioPET, PP, PE, PEF, PET-G/PCT-G, PET avec des fibres de verre, PC, POM, SMMA, PMMA, SAN, PBT, PA6, PA12, PEEK, PPO, PSU, des polymères chargés, notamment avec des charges minérales et/ou des fibres de verre, et des mélanges de ceux-ci.
